# EUROPEAN PATENT APPLICATION

(11) **EP 4 050 313 A1**
(43) Date of publication of application: **31.08.2022**
(21) Application number: 21382159.8
(22) Date of filing: 25.02.2021
(51) Int. Cl.: G01M 5/00, G01M 7/00

(54) **SYSTEM AND METHOD FOR MEASURING RESPONSE OF STRUCTURES**

(71) Applicant: Universitat Politècnica De Catalunya, 08034 Barcelona (ES); Universidad de Castilla la Mancha, 13071 Ciudad Real (ES)
(72) Inventor: KOMARIZADEHASL, Seyedmilad, 08034 Barcelona (ES); TURMO, Jose, 08034 Barcelona (ES); LOZANO GALANT, José Antonio, 13005 Ciudad Real (ES)
(74) Representative: Segui Quetglas, Margalida

(57) **Abstract**

A system and method for measuring response of structures are disclosed. The system comprises a plurality of time-synchronized sensors configured to measure a structural response signal of a given location of a structure, the plurality of time-synchronized sensors being placed on a same rigid plate with all their axes aligned in a same direction to measure the same structural response signal; at least one multiplexor operatively connected to the plurality of time-synchronized sensors and configured to synchronize the measurements thereof and to provide each time-synchronized sensor with a unique address so data derived from the synchronized measurements can be processed individually by a processing unit. The processing unit measures a response of the structure by means of averaging each individual data.

## Description

### Technical Field

The present invention is directed to a system and method for measuring the response of structures, in particular for assessing the health state of such structures.

### Background of the Invention

Civil infrastructures and structures might be considered the leading basis of today's modern society; consequently, their health state is of the highest importance. However, data provided by ASCE infrastructure grades indicates that in the United States: (1) There are about 9.1% structurally inefficient bridges, (2) the deficient bridges are under 188 million trips every year, (3) while the life span of many bridges is 50, the average bridge in the U.S is 43 years old.

Evaluating these structures along with their health state assessment is needed to reduce the reparation costs, the maintenance applications and eventually, for certifying infrastructure/structure safety. Structural Health Monitoring (SHM) applications issue statistics on the functioning state of structures and their structural response. In fact, it is detailed by many scholars (see, e.g. [1]) that SHM can also be used for calibrating digital twins (digital models of real structures) that imitate the infrastructure attitude to evaluate the decision-making process during the maintenance phase [2-4].

For measuring the structural response (such as deflections, strains, rotation and accelerations) over time, sensors are widely used in SHM systems. The recorded information of the sensors is then used for structural performance estimations. Time variation of some environmental elements (such as temperature or humidity) is so slow that they can be accounted for quasi-static or static. On the contrary, some events (such as traffic-induced vibrations, ambient activities, and waves from seismic activities) are considered dynamic.

To acquire the structural digital twins' characteristics, structural system identification methods are used [5][6]. Set up from the structural response that was induced, structural system identification applications can be grouped as static or dynamic as well. A few different dynamic structural system identification applications exist in the literature. These techniques need the real structure's dynamic features, such as frequencies, damping ratio and mode shapes. Nowadays, Operational Model Analysis (OMA) methods are widely used to calculate the dynamic characteristics. The OMA applications are mostly using commercial accelerometers as their primary input.

Accelerometers are force-sensors that are broadly used for measuring vibrations. There are various categories of accelerometers. Each type of vibration sensing technology is based on its specific assumptions and principles. In following the most usual varieties of vibration sensing technologies are briefly illustrated. Accelerometers are frequently set up on one of the following concepts: piezoelectricity, piezoresistivity, and differential capacitive measurement. In the following, a few types of accelerometers are briefly introduced. (1) One of the most popular accelerometers in the industry is the piezoelectric one. For measuring the dynamic changes in mechanical variables, the piezoelectric effect of specific materials is used. The main advantage of these devices is that they can operate on a wide range of frequencies. (2) The second most popular vibration acquisition sensors are strain gauge accelerometers (piezoresistive). Piezoresistive accelerometers measure the change in electrical resistance of a particular piezoresistive element when vibrations are induced. (3) The differential capacitive accelerometers can acquire vibrations by measuring the changes in capacitance of a seismic mass. (4) Micro-Electro-Mechanical Systems (MEMS) are silicon-based microsensors. These sensors can be built from any aforementioned principles. Moreover, traditionally MEMS accelerometers have a built-in signal conditioner on their circuit.

A brief literature review on various accelerometers for SHM applications are organized in Table 1. Content of this table is ordered by the price of the accelerometers (cost of the acquisition equipment is not included). It includes the following information organized in columns: (1) Sensor number, (2) Sensor name, (3) Sensor price, (4) Acceleration range: the maximum acceleration amplitude capacity of the sensors, (5) Frequency range: the accurate, readable range of frequencies, (6) Spectral Noise: the power spectral density of noise per unit of bandwidth (1 Hz), (7) Operational temperature: temperature range where the sensor works accurately, (8) Type: Uni stands for uniaxial, Tri for triaxial, P for piezoelectric and M for MEMS (uniaxial accelerometers are only capable of sensing vibration from one axis, while triaxial ones can sense vibrations from all of the directions).

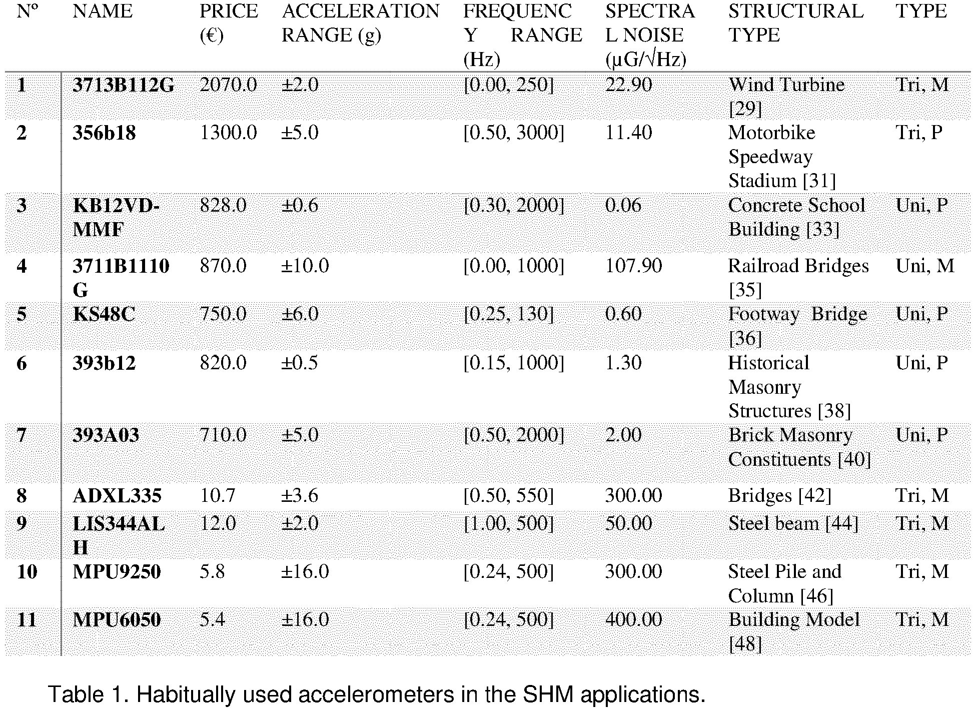

Evaluation of Table 1 indicates a vast range of sensor prices. It is noted that one of the principal limitations of SHM analysis is the cost of the needed equipment for vibration acquisition. Analysis of Table 1 indicates that the low-cost MEMS accelerometers (Numbered 8,9,10,11 in this table) generally have lower accuracy. Their high spectral noises affected their resolution on low acceleration ranges and made them less accurate than other solutions with high cost (such as number 2 and 7, which are popular for SHM) . Moreover, the literature review shows that the use of these low-cost MEMS accelerometers is limited in projects with strong motions.

There are also known some patent and patent applications in this field.

US20170220718 A1 discloses an SHM device and method. The method includes sensing vibrations at a plurality of locations of a structure by a plurality of time-synchronized sensors. The method further includes determining a first set of dependencies of all sensors of the time-synchronized sensors at a first sample time to any sensors of a second sample time, and determining a second set of dependencies of all sensors of the time-synchronized sensors at the second sample time to any sensors of a third sample time. The second sample time is later than the first sample time, and the third sample time is later than the second sample time. The method then determines whether the structure has changed if the first set of dependencies is different from the second set of dependencies. Therefore, automated SHM can ensure safety at a lower cost to building owners.

EP3132242 B1 provides structural health monitoring and protection systems and methods. System and methods utilize structural information and/or enhanced built in testing capabilities for detecting failure modes that may cause damage to a structure. Systems and methods herein may protect a structure by mitigating one or more incorrect forces. The structure may be an aircraft, a rotary wing aircraft, or any other physical structure subject to vibrations and receptive to cancelling of those vibrations.

US7719416 B2 discloses a method of maintaining a structure. The method includes providing a structure having a component subject to failure. A sensor, a memory and an energy harvesting device are mounted on the structure. The sensor is used and data derived from the sensor logged in the memory, wherein the memory is powered solely with energy derived from the energy harvesting device. The component is replaced if information in the memory shows that the component was subject to damaging usage.

US20170160243 A1 provides an intelligent sensor device mounted onto or near a structure to be monitored. The device includes an actuating unit that generates acoustic or ultrasonic excitation signals across the structure, a sensor unit that receives the structure's responses to the excitation signals and generates corresponding sensor data, a processing unit that determines the structure's structural health (e.g., structural change, structural defect, structural damage) by processing the sensor data with analytic algorithms. The smart device also includes at least a non-volatile memory (e.g., Flash memory) for storing the structural health information and sensor data. Such a smart structural health monitoring device is capable of independently determining the structural changes and damages. And multiple smart structural health monitoring devices can be used for monitoring one or more structures at the same time. A remote management console is used to configure, schedule, coordinate, and control the devices through a network. Each device transmits the results of structural changes and damages to the remote management console through according to a schedule or upon request.

Other methods and systems are also known by US10746758 B2, CN104296746 B, KR102068446 B1 and KR102168403 B1.

### References

[1] D. Straub et al., "Value of information: A roadmap to quantifying the benefit of structural health monitoring," in ICOSSAR - 12th International Conference on Structural Safety & Reliability, Aug. 2017, no. 12, pp. 3018-3029.
[2] L. Sun et al., "Review of Bridge Structural Health Monitoring Aided by Big Data and Artificial Intelligence: From Condition Assessment to Damage Detection," Journal of Structural Engineering, vol. 146, no. 5, pp. 04020073-04020095, May 2020, doi: 10.1061 /(asce)st.1943-541x.0002535.
[3] Z. Shang, L. Sun, Y. Xia, and W. Zhang, "Vibration-based damage detection for bridges by deep convolutional denoising autoencoder," Structural Health Monitoring, pp. 147592172094283-, 2020, doi: 10.1177/1475921720942836.
[4] E. Castillo, J. A. Lozano-Galant, M. Nogal, and J. Turmo, "New tool to help decision making in civil engineering," Journal of Civil Engineering and Management, vol. 21, no. 6, pp. 689-697, Aug. 2015, doi: 10.3846/13923730.2014.893904.
[5] J. Lei, J. A. Lozano-Galant, D. Xu, and J. Turmo, "Structural system identification by measurement error-minimizing observability method," Structural Control and Health Monitoring, vol. 26, no. 10, pp. e2425-e2444, Oct. 2019, doi: 10.1002/stc.2425.
[6] J. A. Lozano-Galant, M. Nogal, J. Turmo, and E. Castillo, "Selection of measurement sets in static structural identification of bridges using observability trees," Computers and Concrete, vol. 15, no. 5, pp. 771-794, May 2015, doi: 10.12989/cac.2015.15.5.771.

### Description of the Invention

An object of the present invention is thus to provide a system (or device) and method for measuring the response of structures (e.g. buildings, bridges, etc.) and their elements (e.g. columns, beams, etc.) enhancing the accuracy, noise level, and resolution of low-cost sensors (e.g. accelerometers, among others) by decreasing the inherent noise of individual sensors far beyond their data-sheet characteristics.

This object is fulfilled by a system with the characteristics of claim 1 and by a method with the features of claim 11.

To that end the present invention proposes, according to one aspect, a system for measuring the response of structures, comprising a set of time-synchronized sensors to measure a structural response signal of a given location of a structure, the set of time-synchronized sensors being placed on a same rigid plate with all their axes aligned in a same direction to measure the same structural response signal; at least one multiplexor configured to synchronize the measurements of the set of time-synchronized sensors and to provide each time-synchronized sensor with a unique address, so data derived from the synchronized measurements can be processed individually by a processing unit; and the processing unit configured to measure a response of the structure by means of averaging each individual data.

In an embodiment, the processing unit is further configured to calculate a frequency domain transform function of the averaged individual data, for example the Fast Fourier Transform, among others.

The time-synchronized sensors can be accelerometers, gyroscopes, magnetometers, barometers, distance sensors and/or pressure sensors.

In an embodiment, the axes of the time-synchronized sensors are parallel to each other.

In an embodiment, the time-synchronized sensors are directly mounted on the rigid plate, particularly of a metal material, and a printed circuit board (PCB) is mounted on top of the time-synchronized sensors for aligning them.

In an embodiment, the system also includes a casing to hold/protect the time-synchronized sensors, the multiplexor and the processing unit. The casing can also have a display. Moreover, the system/device can be powered via one or more batteries, a solar panel or a thermoelectric generator, among others.

A controller/microprocessor can be also included to schedule, coordinate, configure, report and/or control the processing unit, the time-synchronized sensors and the multiplexor through a network. Likewise, in some embodiments, a memory unit for storing the data derived from the measurements of the time-synchronized sensors can be also included.

In some embodiments, the system also has a communication unit for communicating with other devices or systems, either wirelessly or via a wired connection.

Present invention also proposes, according to another aspect, a method for measuring the response of structures, comprising placing a plurality of time-synchronized sensors on a same rigid plate with all their axes aligned in a same direction, and measuring a structural response signal of a given location of a structure via the plurality of time-synchronized sensors, the latter being synchronized using at least one multiplexor; providing, by the multiplexor, each time-synchronized sensor with a unique address so that data derived from the measurements can be individually processed by a processing unit; and measuring, by the processing unit, a response of the structure by means of averaging each individual data, the data being previously received from the at least one multiplexor.

In some embodiments, the method also calculates a frequency domain transform function of the averaged individual data, particularly, the Fast Fourier Transform.

In some embodiments, the averaged data is further saved with an exact date and time with microsecond resolution.

In a particular embodiment, the time-synchronized sensors comprise accelerometers working in different acceleration ranges, for example, between ±2g and ±16g.

Thus, present invention provides a wireless Super Adaptable Reliable instrument, particularly based on the Arduino technology, which can work as a uniaxial, biaxial, triaxial or up to nine-axial sensor. The instrument is cheap, small, light and user-friendly, needs no other signal acquisition equipment, and can have a sampling frequency of 330 Hz with a resolution of 0.000009 m/s², a frequency range of [0.1-165 Hz] and a Root Mean Square (RMS) noise of 81 µg/√Hz.

### Brief Description of the Drawings

The previous and other advantages and features will be more fully understood from the following detailed description of embodiments, with reference to the attached figures, which must be considered in an illustrative and non-limiting manner, in which:
Fig. 1 illustrates an example of a FFT data process for 0.5 Hz experiment errors for 1 sensor (a), 2 sensors (b), 3 sensors (c), 4 sensors (d) and 5 sensors (e).
Fig. 2 is a flow chart illustrating a method for measuring the response of structures, according to an embodiment of the present invention.

### Detailed Description of Preferred Embodiments

Present invention can be divided into two parts: a sensing part and an acquisition part. The sensing part comprises a set of time-synchronized sensors (or circuits) and one or more multiplexors. In an embodiment, the sensors are positioned next to each other, aligned by a PCB board. This board is used first to ensure that all sensors' acquisition direction is parallel. Secondly, it is used to use wires as short as possible. For making sure that all the sensors are receiving the same response signal from the structure, a rigid plate, particularly of metal, is used. The acquisition part particularly consists of a processing unit such as an Arduino which is in charge of controlling and processing the data measured by the sensors.

In some embodiments, the acquisition part particularly includes a controller/microprocessor such as a raspberry pi, which is in charge of functions such as saving the data, controlling the processing unit, uploading the saved data, scheduling a signal acquisition for a specific date and time, upgrading the processing unit, etc.

The time-synchronized sensors, as described herein, can be accelerometers, gyroscopes, magnetometers, barometers, distance sensors, pressure sensors, etc. In a particular embodiment, the sensors are accelerometers.

The sensing part reads structural response signals (for example vibrations, with a bandwidth of 165 Hz, in case the set of time-synchronized sensors are accelerometers) and sends this synchronized information to the acquisition part. Firstly, in the acquisition part, the processing unit averages all sensors' output for each direction. Secondly, the controller can save the outputs of the processing unit together with the exact date and time of the Internet. Since structural responses from the structures, for example for SHM applications, need synchronized sensors, the Internet's time with a microsecond resolution is the best solution that is used by present invention. In fact, since each time-synchronized sensor works individually from the others, having just the frequency sampling may not be enough for future synchronizations.

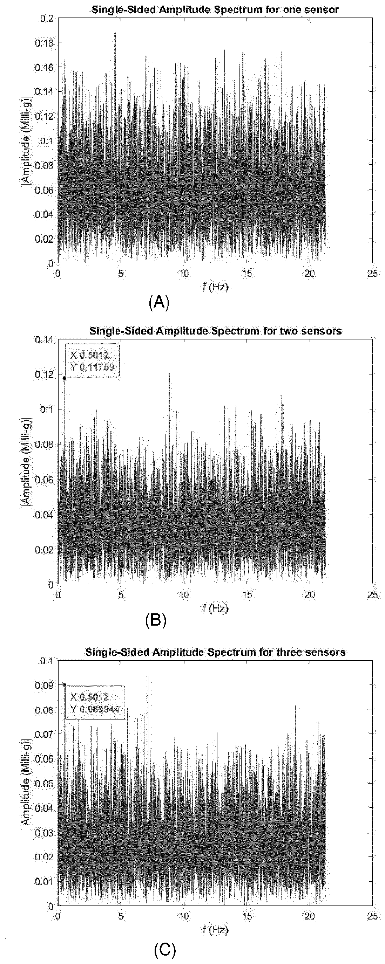

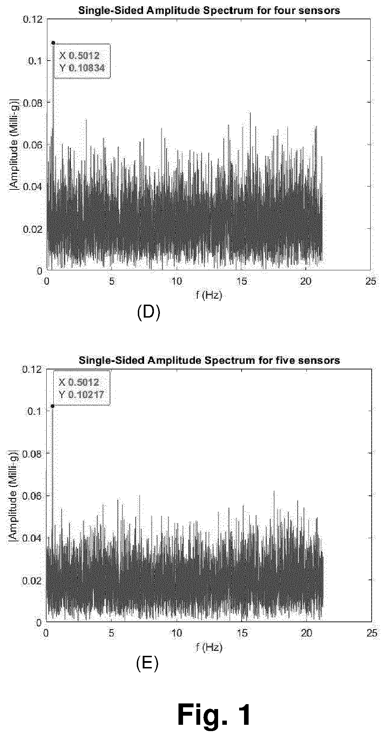

In some embodiments, a frequency domain transform function, particularly the Fast Fourier Transform (FFT), is implemented on the saved averaged values to exclude each sensor's inherent noises. It is proven and shown that by doing the FFT on the sensors' averaged results, FFT output has a better resolution, accuracy, and noise level than the FFT output of a single sensor. Fig. 1 shows that having more sensors results in an improved resolution and accuracy without using low-pass and high-pass filters. Fig. 1 shows the FFT results of a test with different number of sensors for measuring a signal with the frequency of 0.5 Hz and acceleration amplitude of 0.1006 Milli-g.

The proposed system (or device) can adapt to different projects' needs. The system can get hardware upgrades for resolution and RMS noise improvements. Easy to use add-ons have been also designed, and up to two can connect to the acquisition part. More packages could be added to the system/device for more features and adaptability, such as a casing, an LCD touch screen for onsite visualization, battery, solar panel for sustainability, etc. Moreover, the system/device can be connected to angular and ranging systems, among others, based on Arduino technology.

Some other features of the invention are:
1. Resolution of 0.000009 m/s^2 and RMS noise of 81 µg/√Hz for Z direction in case of the time-synchronized sensors being accelerometers. Besides, it has a resolution of 0.000005 m/s^2 and RMS noise of 50.1 µg/√Hz for X and Y directions.
2. Controlling and monitoring the system wirelessly (for downloading the saved data or changing the instrument's frequency sampling, or updating the main code).
3. Getting the system updated with new code upgrades wirelessly or via a wired connection. The system is getting upgraded in terms of code and its library code. To have the latest upgrades, a code needs to be uploaded to the sensors, which can be done wirelessly for constant improvement.
4. Using open-source software and hardware to adapt to customers' needs (Arduino platform and python).
5. Using a free commercial application for controlling the sensors (VNC viewer).
6. Having the exact date and time of data capture for future data synchronization with microsecond resolution.
7. Recording data from a few similar sensors with the same I2C address.
8. The system can be connected to the Internet with WIFI and LAN.
9. The system can work offline and without an Internet connection as well. It would need an SD3231 add-on for keeping the time of capture. Even in the absence of the Internet, the system can be accessed wirelessly on the site via the intranet that it can share.
10. The sampling frequency can be controlled.
11. A ground connection has been connected to the digital ground for a more reliable data acquisition.
12. The accelerometers can work on four acceleration amplitude ranges (±2g, ±4g, ±8g and ±16g).

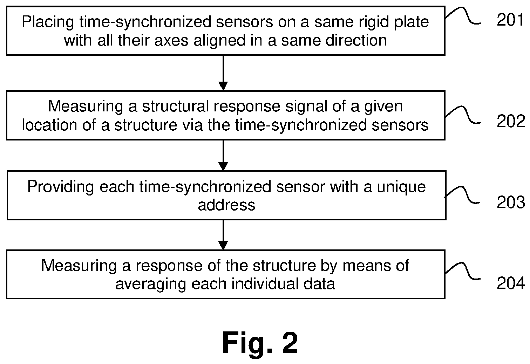

With regard to Fig. 2, therein it is illustrated an embodiment of the proposed method. According to this embodiment, the method, at step 201, comprises placing (two or more) time-synchronized sensors, for example accelerometers, among others, on a same rigid plate with all their axes aligned in a same direction, and measuring, at step 202, a structural response signal, such as a vibrational signal, of a given location of a structure. At step 203, a multiplexer provides each time-synchronized sensor with a unique address so that the synchronized data derived from the measurements can be individually processed by a processing unit. At step 204, the processing unit measures a response of the structure by means of averaging each individual data.

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in software elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

The scope of the present invention is defined in the following set of claims.

## Claims

1. A system for measuring the response of structures, comprising:
a plurality of time-synchronized sensors configured to measure a structural response signal of a given location of a structure, the plurality of time-synchronized sensors being placed on a same rigid plate with all their axes aligned in a same direction to measure the same structural response signal;
at least one multiplexor operatively connected to the plurality of time-synchronized sensors and configured to synchronize the measurements thereof and to provide each time-synchronized sensor with a unique address so data derived from the synchronized measurements can be processed individually by a processing unit; and
the processing unit configured to measure a response of the structure by means of averaging each individual data.

2. The system of claim 1, wherein the processing unit is further configured to calculate a frequency domain transform function of the averaged individual data, said frequency domain transform function comprising a Fast Fourier Transform.

3. The system of claim 1 or 2, wherein the time-synchronized sensors comprise accelerometers, gyroscopes, magnetometers, barometers, distance sensors and/or pressure sensors.

4. The system of any one of the previous claims, wherein the axes of the time-synchronized sensors are parallel to each other.

5. The system of any one of the previous claims, wherein the time-synchronized sensors are directly mounted on the rigid plate and a printed circuit board is mounted on top of the time-synchronized sensors for aligning them.

6. The system of any one of the previous claims, further comprising a casing that at least holds the time-synchronized sensors, the multiplexor and the processing unit.

7. The system of any one of the previous claims, further comprising a controller to schedule, coordinate, configure, report and/or control the processing unit, the time-synchronized sensors and the multiplexor through a network.

8. The system of any one of the previous claims, further comprising a memory unit for storing the data derived from the measurements of the time-synchronized sensors.

9. The system of any one of the previous claims, further comprising a communication unit for communicating with other devices or systems, either wirelessly or via a wired connection.

10. The system of claim 6, further comprising a display and a power supply unit including one or more batteries, a solar panel or a thermoelectric generator.

11. A method for measuring the response of structures, comprising:
placing a plurality of time-synchronized sensors on a same rigid plate with all their axes aligned in a same direction, and measuring a structural response signal of a given location of a structure via the plurality of time-synchronized sensors, the latter being synchronized using at least one multiplexor;
providing, by the multiplexor, each time-synchronized sensor with a unique address so that data derived from the measurements can be individually processed by a processing unit; and
measuring, by the processing unit, a response of the structure by means of averaging each individual data, the data being previously received from the at least one multiplexor.

12. The method of claim 11, further comprising calculating a frequency domain transform function of the averaged individual data, said frequency domain transform function comprising a Fast Fourier Transform.

13. The method of claim 11, further comprising storing the averaged data with an exact date and time with microsecond resolution.

14. The method of any one of the previous claims 11 to 13, wherein the time-synchronized sensors comprise accelerometers, gyroscopes, magnetometers, barometers, distance sensors and/or pressure sensors.

15. The method of any one of the previous claims 11 to 13, wherein the time-synchronized sensors comprise accelerometers working in different acceleration ranges comprised in a range between ±2g and ±16g.
